# EUROPEAN PATENT APPLICATION

(11) **EP 1 703 479 A1**
(43) Date of publication of application: **20.09.2006**
(21) Application number: 05300197.0
(22) Date of filing: 18.03.2005
(51) Int. Cl.: G07F 19/00

(54) **Computer system and user device**

(71) Applicant: Hewlett-Packard Development Company, L.P., Houston, TX 77070 (US)
(72) Inventor: Saunier, Louisa, 38053, Grenoble Cedex 09 (FR)
(74) Representative: Lloyd, Richard Graham

(57) **Abstract**

A transaction number (TAN) list is loaded from a server computer to a client via a network. The TAN list is encrypted using a TAN from a current TAN list. Decryption is performed by the client. The invention can be used as an extension to the **PIN/TAN** protocol in order to replace the requirement for sending paper copies of TAN lists by regular mail.

## Description

### Field of the invention

The present invention relates to the field of computer systems and methods, and more particularly without limitation to the field of financial data processing systems and home banking computer systems.

### Background and prior art

The use of one-time passwords known as transaction tokens or-because of their frequently numerical form-transaction numbers (TANs) for authentication of various online transactions is common practice, in particular for authorization of financial transactions.

For example, the so called PIN/TAN protocol is widely used for home banking applications in various countries, especially in Europe. In accordance with the PIN/TAN protocol the holder of an account is provided with a personal identification number (PIN) and a list of TANs. The PIN and the list of TANs are sent by regular mail to the user for security reasons.

In order to perform a financial transaction from his or her home computer, the user needs to enter user identification information, such as the account number or customer number and the PIN. For authorization of a financial transaction, the user needs to enter an unused TAN from the list of TANs. After usage of the TAN, the user crosses out the used TAN from the list of TANs as a used TAN can not be used again. When the bank's server computer recognizes that the remaining number of unused TANs on the list of TANs of the user has reached a lower limit, a new list of TANs is automatically generated and sent by regular mail to the user.

There are a number of drawbacks inherent to the paper-based TAN list system:
- If a user runs out of unused TANs, he or she has to wait until the mail services deliver the new unused list of TANs before he or she can order the desired financial transaction.
- The user has to cross used TANs off the list, which creates a source of errors. Any user mistake can lead to the transaction being rejected or, if the error is repeated, even to blocking of access to the online banking service. Unblocking this access causes substantial administrative effort and costs.
- High administrative effort and financial outlay due to the need for banks to print the TAN lists and distribute them to users.

In 1995 the German banks represented by their associations participating in the Central Banking Committee (ZKA-ZENTRALER KREDITAUSSCHUSS) announced a common online banking standard called 'Home Banking Computer Interface' (HBCI). In 2003 the ZKA announced the next generation of this standard which is called Fi nTS (Financial Transaction Services). This standard contains the definition of new roles to improve the communication possibilities between users and banks. FinTS supports a variety of electronic banking services like money transfers, bank statements, time deposits, investments and the whole area of online brokerage. The HBCI and FinTS standards are available for download from http://www.hbci-zka.de/. Both the HBCI and FinTS standards integrate the PIN/TAN protocol.

In 2004, co-operative banks in Germany introduced the Sm@rt-TAN system. As outlined in a press release available under hftp://www.gad.de/, bank customers are provided with a smartcard reader that is not connected to a personal computer. Upon insertion of the customer's bank card into the reader and operation of a button, an application transaction counter internal to the smartcard is incremented, and a TAN calculated from the value of the counter in combination with a secret key stored on the bank card. The reader displays the resulting TAN.

The Mobile TAN system of Novosec AG (http://www.novosec.com/) uses a standard mobile phone. To release the customer's order, the bank sends a TAN directly via SMS to the customer's mobile phone.

### Summary of the invention

In accordance with the present invention there is provided a computer system comprising a database for storing a current list of hashed transaction numbers (TANs), a TAN generator for generating a new list of TANs, an encryption component for encrypting the new list of TANs, an interface for sending the encrypted list of TANs to a user device, a hashing component for hashing the TANs of the new list of TANs, and program instructions for replacing the current list of hashed TANs by the new list of hashed TANs.

The present invention is particularly advantageous as it facilitates to provide a new list of TANs to a user by data transmission, such as via the Internet or another public telecommunication network. This substantially reduces the administrative expense for providing TAN lists to users. Furthermore, users get instantaneous access to a new list of TANs without having to wait for the delivery of the postal services. Depending on circumstances such as the personal preferences of an individual user, it may be desirable and remains possible to distribute TAN lists in the traditional, paper-based way.

Security against unauthorized access to the TAN lists is provided by encryption. Before a new list of TANs is transmitted to a user it is encrypted. The encryption is a reversible process such that decryption can be performed by the user device that receives the encrypted new list of TANs. In addition, the hash values for the TANs of the new list of TANs are calculated by the banking server computer. The new list of hashed TANs is stored by the banking server computer for later reference whereas the new list of TANs and the encrypted new list of TANs can be deleted by the banking server computer from its memory for additional protection against unauthorized access.

In accordance with an embodiment of the invention the new list of TANs is stored only temporarily in order to perform the encryption and the hashing. After the new list of TANs has been generated it is temporarily stored by the banking server computer in order to encrypt the new list of TANs and for hashing of the TANs of the new list of TANs. The encrypted new list of TANs is transmitted from the banking server computer to the user device of the user that requires the new list of TANs. The new list of hashed TANs is stored in the database of the banking server computer for later reference. After encryption and hashing the new list of TANs and the encrypted new list of TANs are erased from the temporary storage of the banking server computer in order to prevent unauthorized access and misuse of the new list of TANs.

It is to be noted that the hashing performed on the TANs of the new list of TANs is an irreversible process such that the TANs cannot be reconstructed from the respective hash values. Hence, the new list of hashed TANs that is stored in the database is useful for checking a user's authorization to perform a transaction while it prevents a third party from misusing the TANs.

In accordance with an embodiment of the invention the computer system has an interface that is adapted to receive a request for the new list of TANs from the user device. The request carries a previously unused TAN from the current list of TANs of that user. The unused TAN of the request is hashed by the banking server computer for comparison with the respective hashed TAN on the new current list of hashed TANs that is stored in the database for that user. If the hash values of the TAN contained in the request and the respective hashed TAN on the current list of hashed TANs stored in the database are identical, the user request for a new list of TANs is accepted.

In accordance with an embodiment of the invention a previously unused hashed TAN from the current list of hashed TANs stored in the database is used by the banking server computer as a key for encryption of the new list of TANs prior to transmission to the requesting user device. For example, the banking server computer reads the hash value from the current list of hashed TANs stored on the database for that user which is offset from the TAN contained in the request by a predefined distance. Preferably the banking server computer reads the hashed TANs from the current list of hashed TANs that is consecutive to the hashed TAN corresponding to the TAN of the user request.

In accordance with an embodiment of the invention the request for a new list of TANs can be received via a public network, such as the Internet, a mobile telecommunications network or another telecommunication network. The encrypted list of new TANs is transmitted from the banking server computer to the requesting user device via the public network. It is preferred that an initial list of TANs is transmitted to the user via an access protected private network or transmission channel. For example, an initial list of TANs is sent to the user by regular mail as a printout. Alternatively, the user device is coupled to an access protected private network for downloading the initial list of TANs. After the initial list of TANs has been transmitted to the user, the user can request and obtain a new list of TANs via a public network.

In another aspect the present invention relates to a user device. The user device has a storage component for storing a current list of TANs, program instructions for generating a request for a new list of TANs, the request comprising a first unused TAN from the current list of TANs, interface means for sending the request to a computer system, such as a banking server computer, and for receiving an encrypted new list of TANs from the computer system, a decryption component for decryption of the encrypted new list of TANs using a second unused TAN from the current list of TANs, and program means for replacing the current list of TANs by the new list of TANs.

In accordance with an embodiment of the invention the second unused TAN is hashed to provide a symmetric key for the decryption.

In accordance with an embodiment of the invention the first and second unused TANs have a predefined relative position on the current list of TANs. For example, the second unused TAN is consecutive to the first unused TAN on the current list of TANs.

In accordance with an embodiment of the invention the current list of TANs is stored on a portable data carrier that is accessible by the user device. For example, the user device has an integrated card reader for receiving a storage card, such as a magnetic card, or an integrated circuit card. The portable data carrier serves for storage of the current list of TANs. The user device can read TANs from the current list of TANs stored on the portable data carrier, mark used TANs as 'used' after a TAN has been read or delete used TANs, and replace the current list of TANs by the new list of TANs after receipt from the banking server computer.

Storage of the list of TANs on the portable data carrier has the advantage that the user can use a variety of electronic devices for performing online banking transactions using the same current list of TANs by inserting the portable data carrier into the respective device. For example, the user can use his or her mobile phone for online banking while travelling. When the user is back to his or her home he or she can remove the portable data carrier from the mobile phone and insert the mobile data carrier into a reader of his or her personal computer for home banking applications.

It is to be noted that the present invention is particularly advantageous for financial transaction systems, such as for online banking and home banking applications. However, it can also be used for other types of transactions that require user authorization.

### Brief description of the drawings

In the following preferred embodiments of the invention will be described in greater detail by way of example only making reference to the drawings in which:
- Figure 1: is a block diagram of a first embodiment of a computer system of the invention,
- Figure 2: is a flowchart illustrating a preferred mode of operation of the computer system of Fig. 1 for user authentication,
- Figure 3: is a flowchart illustrating a preferred mode of operation of the computer system of Fig. 1 for providing a new TAN list to a user device,
- Figure 4: shows a block diagram of an embodiment of a database for generating and storing TAN lists,
- Figure 5: is a flowchart illustrating the life cycle of a TAN list,
- Figure 6: illustrates a state machine controlling the activation of TAN lists,
- Figure 7: illustrates a TAN list state machine encompassing encryption state changes,
- Figure 8: shows a TAN list state machine encompassing transitions from non-active to active states and vice versa.

### Detailed description

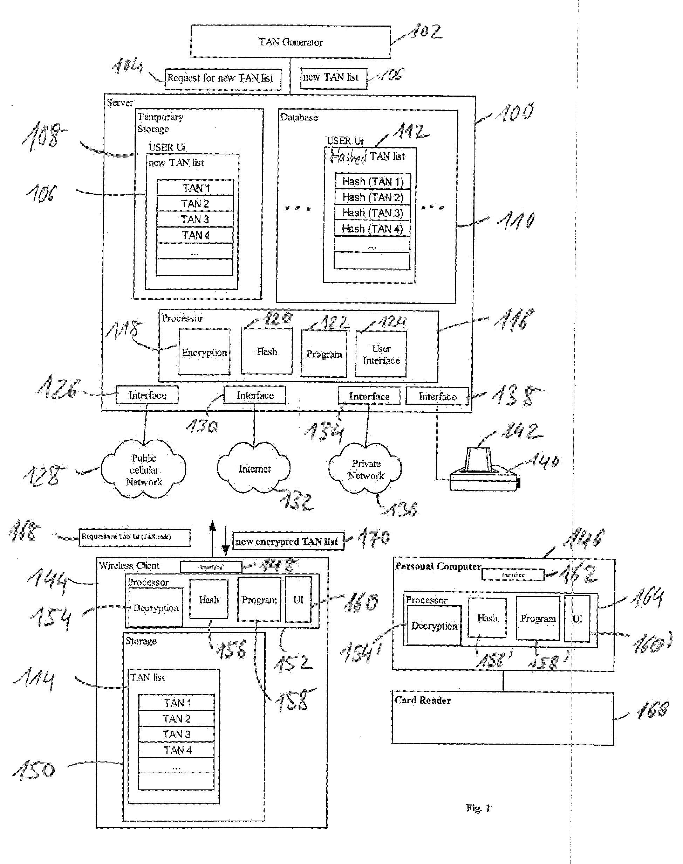

Fig. 1 shows a server computer 100, such as a banking server computer system. The server computer 100 is coupled to a transaction number (TAN) generator 102. The TAN generator 102 contains a pseudorandom number generator for generation of pseudorandom TANs. In response to a request 104 for a new TAN list the TAN generator 102 returns a new TAN list 106. The TAN list 106 has a predefined format of a predefined number of TANs. For example, the new TAN list 106 has a sequence of 40 TANs that are numbered in sequential order.

The server computer 100 has temporary storage 108 for storage of the new TAN list 106.

The server computer 100 has a database 110 for storage of the current hashed TAN list 112 for each registered user Ui. The hashed TAN list 112 contains the hash values of the TANs of the current TAN list 114 used by the user. The hash values on the hashed TAN list 112 have the same sequential order as the respective TANs on the current TAN list 114.

Server computer 100 has processor 116 for execution of various program functions. In particular, processor 116 serves for execution of encryption instructions 118 that serve for encryption of the new TAN list 106, hashing instructions 120 for calculation of hash values for the TANs on the new TAN list 106, program instructions 122 for controlling overall operation of the server computer 100 and user interface instructions 124 for providing a user interface, such as a graphical user interface and/or a web portal.

The server computer 100 has an interface 126 for coupling to a public cellular network 128, such as a GSM, UMTS, and/or other type of mobile telephony or telecommunications network. The interface 130 of server computer 100 implements the internet protocol (IP) for coupling the server computer 100 to the Internet 132.

The interface 134 of the server computer 100 serves for coupling the server computer 100 to a private network 136. The private network 136 is access protected. For example, the accessibility to the private network 136 is limited to certain 'hot spots'. Only if a registered user is located within the range of such a hot spot the establishment of a communication channel is enabled.

As an alternative or in addition to interface 134 the server computer has interface 138 to a printer 140 that serves to print out an initial TAN list 142. The initial TAN list 142 has the same structure as the current TAN list 114 and the new TAN list 106. The initial TAN list 142 is provided to a new user via the private network 136 or as a printout. After the user has obtained the initial TAN list 142 he or she can use the cellular network 128 and/or the Internet 132 for downloading the new TAN list 106 in encrypted form.

The user Ui has a wireless client 144 and a personal computer 146 in the example considered here. For example, the wireless client is implemented as a mobile telephone, a personal digital assistant, a mobile computer or another mobile electronic device that has a wireless interface 148 for coupling to cellular network 128.

The wireless client 144 has a storage component 150 for storing TAN list 114. The processor 152 of the wireless client 144 serves for execution of various program functionalities. In particular, processor 152 serves for execution of decryption instructions 154, hashing instructions 156, program instructions 158 for providing overall control of the operation of the wireless client 144, and user interface instructions 160 for providing a user interface, such as a graphical user interface, for the user of the wireless client 144. For example, the user interface instructions 160 implement a web browser for access to web pages generated by the web portal provided by the user interface instructions 124.

As an alternative device the user can use personal computer 146 for access to the server computer 100. The personal computer 146 has an interface 162 for access to the Internet 132 and a processor 164 for execution of various program functionalities, in particular decryption instructions 154', hashing instructions 156', program instructions 158' and user interface instructions 160'.

The personal computer 146 has internal storage for storing the current TAN list 114 and/or a card reader 166. For example, the storage component 150 is implemented as a storage card, such as a card having a magnetic stripe for storing the TAN list 114, or an integrated circuit chip card. The storage component 150 can be removed from the wireless client 144 and inserted into the card reader 166, such that the personal computer 146 can access the current TAN list 114 stored on the storage component 150.

For usage of the online banking services provided by the server computer 100 the new user Ui is registered. The new user Ui obtains a personal identification number (PIN) and the initial TAN list 142. This can be done by printing the initial TAN list 142 on the printer 140 and mailing the initial TAN list 142 to the new user by regular mail. Alternatively the new user can connect its wireless client 144 or its personal computer 146 to the private network 136 for downloading of the initial TAN list 142 that has been generated by the TAN generator 102.

The initial TAN list 142 is stored as the current TAN list 114 in the storage component 150 on the user side and - after hashing the TANs - as hashed TAN list 112 in the database 110 on the server side.

As a consequence the user is enabled to perform various financial transactions using the TANs of the current TAN list 114 as authentication tokens. Before the current TAN list 114 is used up, the user is prompted to request a new TAN list 106.

For example, in accordance with the predefined TAN list format, each TAN list has a number of 40 TANs. After the user has used the TAN number 38 on the current TAN list 114, he or she is prompted to initiate a request for the new TAN list 106. If the user asserts, the request 168 for the new TAN list 106 is generated by the program instructions 158. The request 168 contains the next unused TAN of the current TAN list 114, i.e. TAN number 39 in the example considered here.

The request 168 is transmitted via the interface 148 and the cellular network 128 to the server computer 100 where it is received by means of interface 126. Receipt of the request 168 invokes the program instructions 120 for calculating a hash value of the TAN number 39 received with the request 168. The resultant hash value is compared with the corresponding hash value number 39 on the hashed TAN list 112 stored for the user Ui in the database 110 by the program instructions 122. If the two hash values are identical, and if the user has correctly entered his or her PIN, authentication is complete.

Alternatively a more complex authentication is used, such as comprising 2 -way or mutual authentication of the user and the remote server computer 100. Preferably, the server computer 100 is authenticated to prevent another party simulating the server computer's 100 responses (so called man-in-the-middle attack). Authentication of the server computer 100 for prevention of man-in-the-middle attacks can be done using the first available TAN on the TAN list 114, i.e. the TAN number 39 in the example considered here. Next, the user is authenticated using the next available TAN from the TAN list after the preceding TAN number 39 has been used for authentication of the server computer 100.

Preferably, a session key is exchanged to secure the communication between server computer and user device. The session key may be a random or pseudorandom number generated by the server computer after the user having initiated the communication. Before sending the session key to the user device, the server computer encrypts it using as encryption key the hashed form of the first available TAN from the current hashed TAN list 112, i.e. the hashed TAN number 39 in the example considered here. Upon receiving the encrypted session key, the user device hashes the first available TAN from the current TAN list 114 and uses it to decrypt the session key. One way to perform the encryption of the session key is to use the hashed TAN as a one-time pad, i.e. to calculate the exclusive disjunction of the session key and the hashed TAN.

For user authentication the user's wireless client 144 or the user's personal computer 146 encrypts the next unused TAN from the TAN list 114-which is TAN number 40 in the example considered here. The TAN number 40 is encrypted with the session key and a message signature is appended to the result of the encryption. The message signature can be obtained by means of a hash function and for a wireless client may involve an international mobile subscriber identifier (IMSI). The resultant message is sent from the user's device, e.g. the wireless client 144 or the personal computer 146, to the bank's server computer 100.

The bank's server computer 100 decrypts the message using the session key. This is how the server computer 100 obtains the next unused TAN for the user authentication, i.e. the TAN number 40 in the example considered here. The server computer 100 hashes the TAN number 40 and compares it with the respective hashed TAN stored in the hashed TAN list 112. Next, the server computer 100 verifies the signature of the message in order to check that the content of the message sent from the user's device, i.e. the wireless client 144 or the personal computer 146, has not been modified during the transmission to the server computer 100.

After successful authentication, the program instructions 122 generate the request 104 for the new TAN list 106. The TAN generator 102 receives the request 104 and then returns the new TAN list 106. The server computer 100 temporarily stores the new TAN list 106 in temporary storage 108. The new TAN list 106 is encrypted by means of encryption instructions 118 which provide the new encrypted TAN list 170. The new encrypted TAN list 170 is transmitted from the server computer 100 to the wireless client 144 from the interface 126 via the cellular network 128. For example, the hash value of the next unused TAN, i.e. hash value number 40 corresponding to TAN number 40 on the current TAN list 114, is used as a symmetric key for performing the encryption. Alternatively the new TAN list 106 is encrypted by means of the session key, which is used by the secure transmission protocol for the communication between the user device and the server computer 100.

When the new encrypted TAN list 170 is received by the wireless client 144, the program instructions 158 read the next unused TAN from the current TAN list 114, i.e. TAN number 40 from the current TAN list 114. The TAN number 40 is hashed by means of the hashing instructions 156 in order to calculate the hash value of TAN number 40. This hash value is the symmetric key that was used for encrypting the new encrypted TAN list 170. Decryption is performed by means of the decryption instructions 154 using the symmetric key. The new decrypted TAN list is stored as the new current TAN list 114 in the storage 150 as a replacement of the previous current TAN list 114 which has been used up.

In the following the user can perform various transactions using the TANs of the current TAN list 114. The user can remove the storage component 150 from the wireless client 144 and insert the storage component 150 into the card reader 166. Next, the user can perform various transactions by means of the personal computer 146.

It is to be noted that a TAN can have an associated authorization level. For example, a TAN's authorization level can specify a maximum authorized amount for a user's transaction. This can be useful both for online banking applications and other applications, such as online auctions or online betting systems.

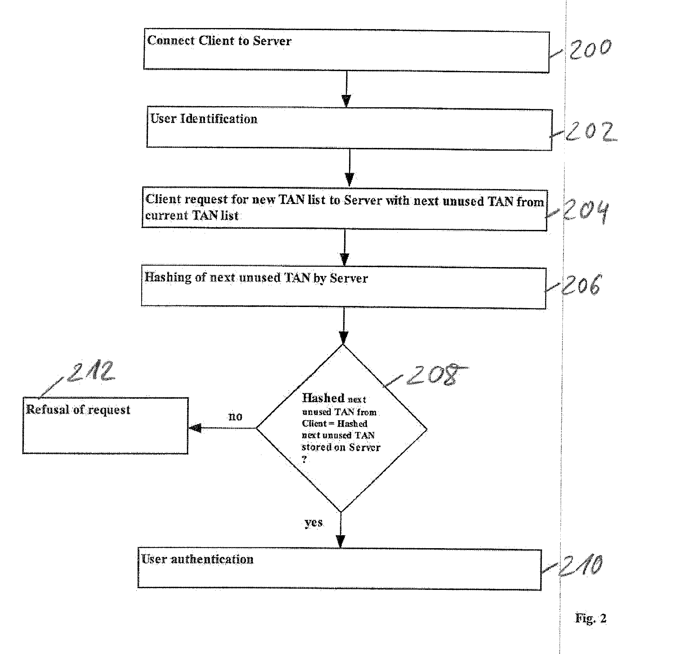

Fig. 2 is a flowchart illustrating the user authentication process when the user requests a new TAN list. In step 200 a client, such as a wireless client or a personal computer, is connected to the server computer via a public network. In step 202 the user enters user identification information, such as his or her PIN and/or customer or account number.

In step 204 a request is generated for a new TAN list that is needed as a replacement of the current TAN list. The request contains the next unused TAN from the current TAN list and is sent from the client to the server.

In step 206 the TAN received with the request is hashed by the server computer. The hashed TAN is compared with the respective hash value of the hashed TAN list stored in the database of the server computer for that user (step 208). If the two hash values match, user authentication is completed successfully (step 210); if the contrary is the case, processing of the request is refused (step 212). Alternatively a more complex user authentication scheme can be used, e.g. the user authentication scheme as explained with respect to Fig. 1.

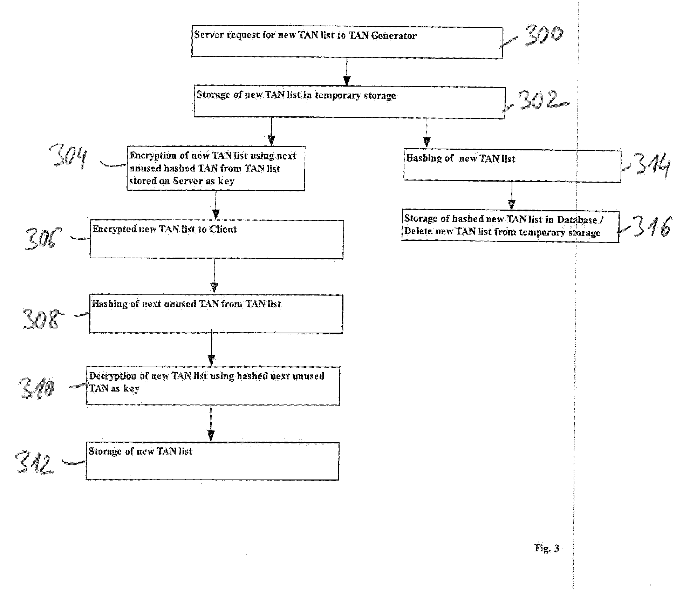

Fig. 3 shows a flowchart illustrating the steps for providing a new TAN list to the requesting client after successful user authentication.

In step 300 the server requests the new TAN list from the TAN generator. In response the TAN generator provides the new TAN list, which is temporarily stored by the server (step 302).

In step 304 the server reads the next hash value from the current hashed TAN list from the database, e.g. the hash value that follows the hash value of the previously received TAN (cf. TAN received from client in step 204 of Fig. 2). The next unused hashed TAN from the current hashed TAN list is used as a symmetric key for encryption of the new TAN list. In step 306 the encrypted new TAN list is sent to the client. The client reads the next unused TAN from its current TAN list and calculates the hash value of the next unused TAN (step 308). In step 310 the client device decrypts the new TAN list using the symmetric key obtained in step 308. The resultant new TAN list is stored as a replacement of the current TAN list in step 312.

After step 302 the step 314 is performed by the server in addition to step 304. In step 314 the new TAN list is hashed, i.e. hash values are calculated for each TAN of the new TAN list. The hashed new TAN list is stored in the database of the server computer for later reference. After encryption (step 304) and hashing the new TAN list is erased from the temporary storage of the server.

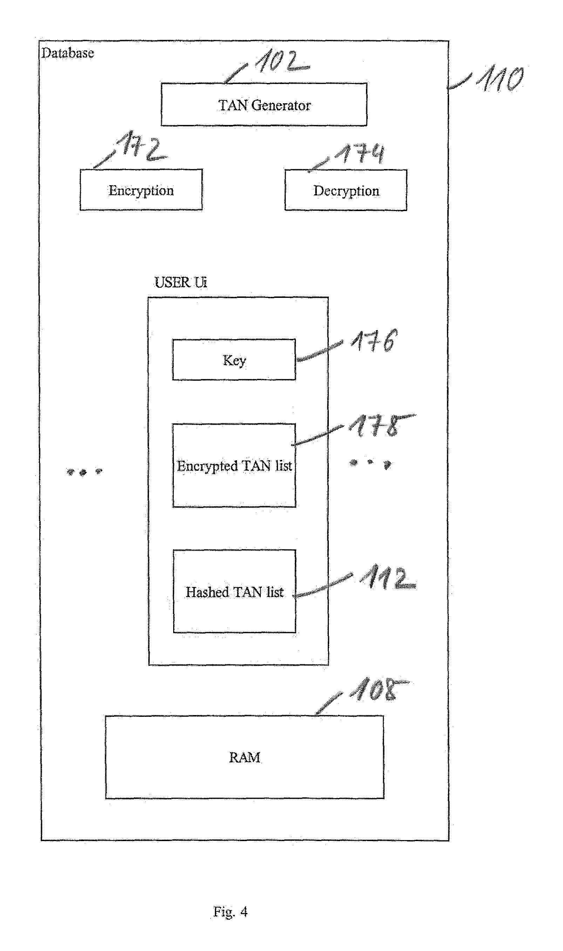

Fig. 4 shows a block diagram of an alternative embodiment of the database 110 of the server computer 100 of Fig. 1. Elements of Fig. 4 that correspond to elements of Fig. 1 are designated by the same reference numerals. In the embodiment of Fig. 4 the TAN generator 102 forms an integral part of the database 110. In addition, the database 110 has an encryption module 172 and a decryption module 174. A user specific key 176 is stored in the database 110 for each user Ui. The key 176 is used by the encryption module 172 for encryption of a new TAN list provided by the TAN generator 102 and by the decryption module 174 for decryption of an encrypted new TAN list 178. The database 110 has a random access memory (RAM) 108 for temporarily storing the new TAN list provided by the TAN generator 102.

In response to a request for a new TAN list, the TAN generator 102 provides such a new TAN list (cf. new TAN list 106 as shown in Fig. 1). The new TAN list is temporarily stored for a short amount of time in the RAM 108. The encryption module 172 encrypts the new TAN list using the user specific key 176 and the resultant encrypted TAN list 178 is stored in the database. The unencrypted new TAN list is erased from the RAM 108.

When a user request for a new TAN list is received (cf. request 168 shown in Fig. 1), the encrypted TAN list 178 is decrypted by the decryption module 174 using the user specific key 176 and the result of the decryption, i.e. the new TAN list, is again temporarily stored in the RAM 108 for a short amount of time. Next, the new TAN list stored in the RAM 108 is encrypted using the next unused hashed TAN from the TAN list (cf. step 304 of Fig. 3) for transmission of the encrypted new TAN list to the user; further, the new TAN list is hashed in order to obtain the hashed TAN list 112 for storage in the database 110 (cf. step 314 and 316 of Fig. 3).

The embodiment considered with respect to Fig. 4 has the advantage that a new TAN list can be generated before a user request (cf. request 168 of Fig. 1) is received by the server computer. This has the advantage that the response time to the user request can be reduced.

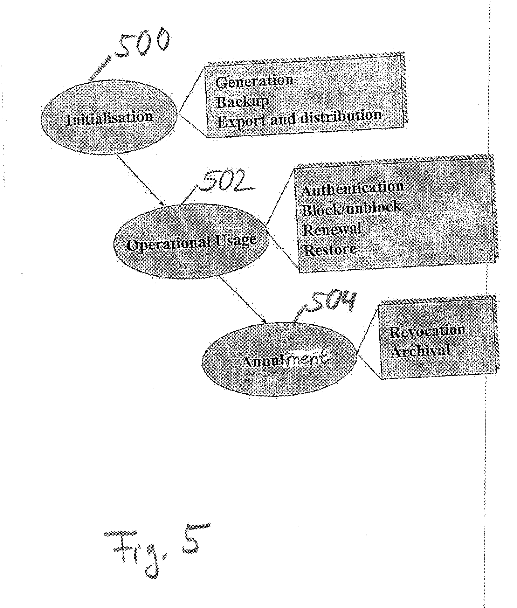

Fig. 5 shows a flowchart that illustrates the life cycle of a TAN list. The life cycle consists of an initialization step 500, operational usage 502 and annulment step 504. In the initialization phase the TAN list is generated and a backup of the new TAN list is stored in the database of the server computer. Upon a user's request the new TAN list is exported and distributed.

After receipt of the new TAN list a user's operational usage of the new TAN list can start in step 502. The operational usage can encompass user authentication for performing a transaction using the TAN list, blocking or unblocking the TAN list, TAN list renewal and/or restore operations.

At the end of the TAN list's life cycle the annulment step 504 is performed. The annulment step can encompass revocation of the TAN list and/or archival of the TAN list or transactions that have been performed using the expired TAN list.

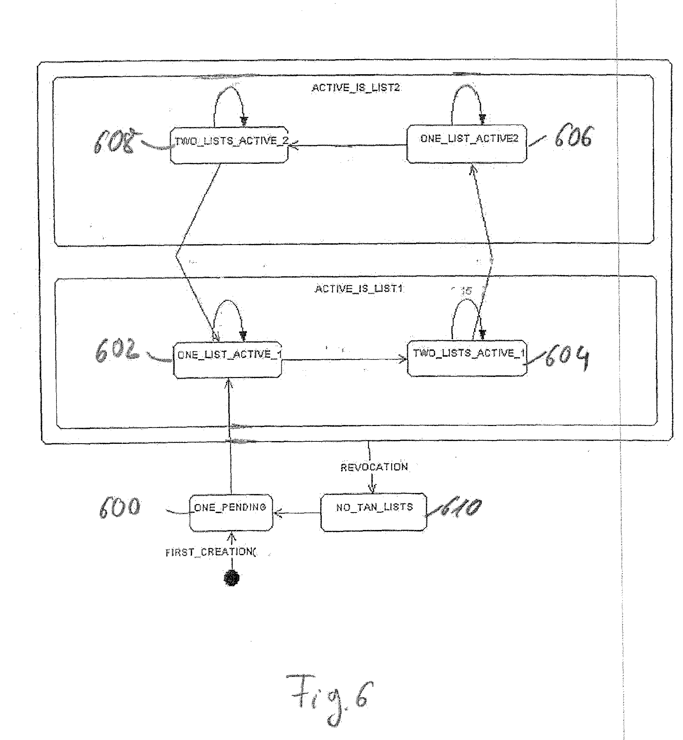

Fig. 6 illustrates a state machine that controls the activation of new TAN lists. Initially a new TAN list is generated for a specific user. This results in the state 600 'one pending'. The newly created TAN list is encrypted and stored only in encrypted form in the database of the server computer. When the user requests a new TAN list the new TAN list is transmitted to the user and activated (state 'one list active one' 602). In the state 602 operational usage of the new TAN list can be made (cf. step 502 of Fig. 5). When a renewal condition is met, e.g. when the active TAN list is used up or when only a few unused TANs remain on the active TAN list, the transition is made to state 'two lists active one' 604. In the state 604 a new TAN list is requested using the first active TAN. After receipt of the next new TAN list, the first TAN list is replaced and operational usage of the new TAN list can start (state 'one list active two' 606). From step 606 the state transition is made to state 608, which corresponds to state 602 with respect to the second TAN list. From there the state transitions back to state 602 when a consecutive new TAN list is received.

When a revocation condition is met all TAN lists are revoked ('no TAN lists' state 610).

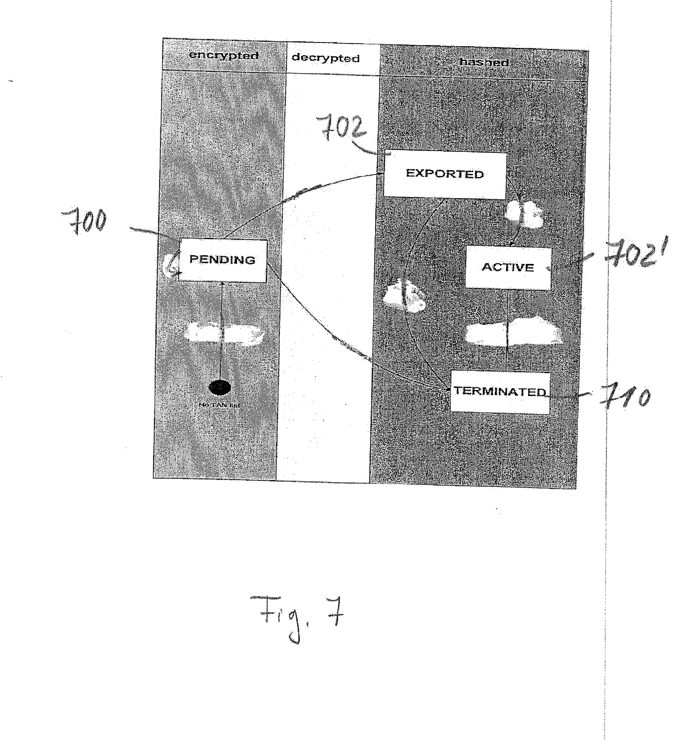

Fig. 7 illustrates a TAN list state machine that controls the encryption state changes of the TAN lists on the database (cf. database 110 of Fig. 4). After its creation a new TAN list is in a state 'pending' 700 that is equivalent to state 600 of Fig. 6. In the pending state the new TAN list is encrypted (cf. encrypted TAN list 178 of the embodiment of Fig. 4). In response to a user request for a new TAN list the encrypted TAN list is decrypted and exported to the user's device (state 702). In addition, the new TAN list is hashed and stored in the database (cf. hashed TAN list 112 of Fig. 4). After receipt of the new TAN list by the user the new TAN list transitions to the state 'active 702' in which operational usage of the new TAN list can be made by the user. If a revocation or termination condition is met the state transitions to state 710 terminated'.

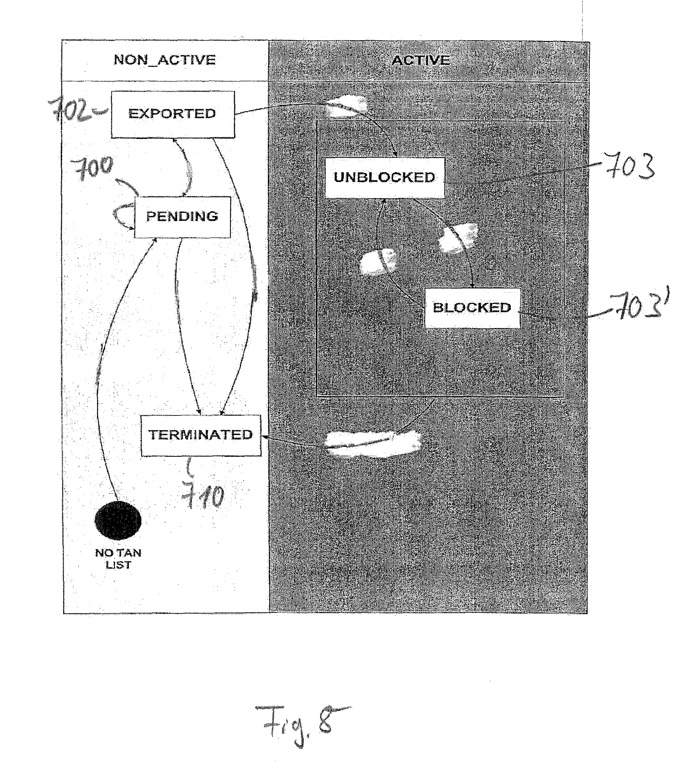

Fig. 8 shows a TAN list state machine that controls the transition from non-active to active state of a TAN list. States of the TAN list state machine of Fig. 8 that correspond to states of the state machine shown in Fig. 7 are designated by the same reference numerals. When a TAN list is in one of the states 700, 702 or 710 it is 'non-active', which means that a user cannot make operational usage of the TAN list. After export of a new TAN list, the exported TAN list becomes active such that it can be used by a user to perform transactions or to request a new TAN list. Proper receipt of the new TAN list by the user results in the active state 'unblocked' 703. If a user repeatedly enters incorrect TANs the active TAN list can transition into the state 'blocked' 703'. From there it can transition back to the unblocked state 703 if an unblocking condition is met. If the TAN list is used up or if a revocation or termination condition is met, the TAN list transitions from active to non-active, i.e. the terminated state 710.

### List of Reference Numerals

- 100: Server computer
- 102: TAN generator
- 104: Request
- 106: New TAN list
- 108: Temporary storage
- 110: Database
- 112: Hashed TAN list
- 114: Current TAN list
- 116: Processor
- 118: Encryption instructions
- 120: Hashing instructions
- 122: Program instructions
- 124: User interface instructions
- 126: Interface
- 128: Cellular network
- 130: Interface
- 132: Internet
- 134: Interface
- 136: Private network
- 138: Interface
- 140: Printer
- 142: Initial TAN list
- 144: Wireless client
- 146: Personal computer
- 148: Wireless interface
- 150: Storage component
- 152: Processor
- 154: Decryption instructions
- 156: Hashing instructions
- 158: Program instructions

- 160: User interface instructions
- 162: Interface
- 164: Processor
- 166: Card reader
- 168: Request
- 170: New encrypted TAN list
- 172: Encryption module
- 174: Decryption module
- 176: Key
- 178: Encrypted TAN list

## Claims

1. A computer system comprising:
• a database (110) for storing a current list of hashed transaction numbers,
• a transaction number generator (102) for generating a new list (106) of transaction numbers,
• an encryption component (118) for encrypting the new list of transaction numbers,
• an interface (126, 130) for sending the encrypted list (170) of transaction numbers for receipt by a user device (144, 146),
• a hashing component (120) for hashing the transaction numbers of the new list of transaction numbers,
• program instructions (122) for replacing the current list of hashed transaction numbers by the new list of hashed transaction numbers.

2. The computer system of claim 1, further comprising a temporary storage component (108) for temporarily storing the new list of transaction numbers before encryption thereof.

3. The computer system of claim 1 or 2, the interface being adapted to receive a request (168) for the new list of transaction numbers from the user device, the request comprising a user transaction number, the hashing component being adapted to hash the user transaction number, the program instructions being adapted to compare the hashed user transaction number with a corresponding hashed transaction number of the current list (112) of hashed transaction numbers stored in the database for authentication.

4. The computer system of claim 1, 2, or 3, the encryption component being adapted to use one of the hashed user transaction numbers as a key for encryption of the new list of transaction numbers.

5. The computer system of any one of the preceding claims, the interface being adapted to receive the request via a public network (1285, 132).

6. The computer system of any one of the preceding claims, further comprising an initialization component (134, 136, 138, 140) for providing an initial list (142) of transaction numbers to the user.

7. The computer system of claim 6, the initialization component being adapted to send the initial list of transaction numbers via a secure channel to the user.

8. A user device comprising:
• a storage component (150) for storing a current list of transaction numbers,
• program instructions (158, 158') for generating a request (168) for a new list (198) of transaction numbers, the request comprising a first unused transaction number from the current list of transaction numbers,
• an interface (148, 162) for sending the request to a computer system (100) and for receiving an encrypted new list (170) of transaction numbers from the computer system,
• a decryption component (154, 154') for decryption of the encrypted new list of transaction numbers using a second unused transaction number from the current list (114) of transaction numbers for the decryption,
the program instructions being adapted to replace the current list of transaction numbers by the new list of transaction numbers.

9. The user device of claim 8, further comprising a hashing component (156) for hashing the second unused transaction number, the decryption component being adapted to use the hashed second unused transaction number for decryption of the encrypted new list of transaction numbers.

10. The user device of claims 8 or 9, the first and the second unused transaction numbers having a predefined relative position on the current list of transaction numbers.

11. The user device of claim 10, the second unused transaction number being subsequent to the first unused transaction number on the current list of transaction numbers.

12. The user device of any one of claims 8 to 11, the storage component comprising a portable data carrier for storing the current list of transaction numbers.

13. The user device of claim 12, the portable data carrier being the storage card.

14. The user device of any one of the claims 8 to 13, wherein the transaction numbers comprise an associated authorization level.

15. A method of providing a transaction number list to a user device, the method comprising:
• receiving a request (168) for a new transaction number list from the user device, the request comprising a first unused transaction number from a current list (114) of transaction numbers,
• hashing the first unused transaction number,
• comparing the hashed first unused transaction number with a corresponding hashed transaction number of a current list (112) of hashed transaction numbers for authentication of the user,
• requesting the new transaction number list from a transaction number generator (102),
• encrypting the new transaction number list using a second hashed unused transaction number from the current list of hashed transaction numbers,
• sending the encrypted new transaction number list (170) to the user device.

16. The method of claim 15, the encrypting adapted to encrypt the new transaction number list using a session key, the method further comprising:
• generating the session key,
• encrypting the session key using the second hashed unused transaction number,
• sending the encrypted session key to the user device.

17. The method of claim 16, the first unused transaction number comprised by the request being encrypted with the session key, the method further comprising decrypting the first unused transaction number before hashing.

18. The method of claim 15, 16, or 17, the first and second unused transaction numbers having predefined relative positions on the current list of transaction numbers.

19. The method of any one of claims 15 to 18, further comprising storing the new transaction number list in a temporary storage component (108) and erasing the new transaction number list from the temporary storage component after encryption and hashing thereof.

20. The method of any one of claims 15 to 19, further comprising hashing the transaction numbers of the new transaction number list and replacing the current list of hashed transaction numbers by the new list of hashed transaction numbers.

21. A computer program product comprising computer executable instructions for performing a method of any one of the preceding claims 15 to 20.

22. A method of obtaining a transaction number list comprising:
• generating a request (168) for a new transaction number list, the request comprising the first unused transaction number from a current list (114) of transaction numbers,
• sending the request to a server computer (100),
• receiving the encrypted new transaction number list (170) from the server computer,
• decrypting the new transaction number list using a second unused transaction number from the current list of transaction numbers.

23. The method of claim 22, further comprising hashing the second unused transaction number from the current list of transaction numbers, whereby the hashed second unused transaction number is used for the decryption.

24. The method of claim 22 or 23, the first and second unused transaction numbers having predefined relative positions on the current list of transaction numbers.

25. The method of claim 22, 23, or 24, further comprising storing the decrypted new transaction number list on a portable data carrier (150).

26. A computer program product comprising computer executable instructions for performing a method in accordance with any one of claims 22 to 25.

27. A server computer comprising:
• database means (110) for storing a current list of hashed transaction tokens,
• transaction token generator means (102) for generating a new list of transaction tokens,
• means (118) for encrypting the new list of transaction tokens,
• interface means (126, 130) for sending the encrypted list of transaction tokens to a user device (144, 146),
• hashing means (120) for hashing the transaction tokens of the new list of transaction tokens,
• program means (122) for replacing the current list of hashed transaction tokens by the new list of hashed transaction tokens.

28. A personal computer comprising:
• storage means (166) for storing a current list (114) of transaction tokens,
• program means (158') for generating a request for a new list of transaction tokens, the request comprising a first unused transaction token from the curr ent list of transaction tokens,
• interface means (162) for sending the request to a computer system (100) and for receiving an encrypted new list (170) of transaction tokens from the computer system,
• means for decryption (154') of the encrypted new list of transaction tokens using a second unused transaction token from the current list of transaction tokens,
• program means (158') for replacing the current list of transaction tokens by the decrypted new list of transaction tokens.

29. The personal computer of claim 28 having a card reader (166) for storing the new list of transaction tokens on an integrated circuit chip card.

30. A wireless end user device comprising:
• a storage card reader (166) for receiving a storage card (150) storing a current list (114) of transaction tokens,
• program means (158) for generating a request (168) for a new list of transaction tokens, the request comprising a first unused transaction token from the current list of transaction tokens,
• wireless interface means (148) for sending the request to a web portal (124) and for receiving an encrypted new list (170) of transaction tokens,
• means (154) for decryption of the encrypted new list of transaction tokens using a second unused transaction token from the current list of transaction tokens,
• program means (158) for replacing the current list of transaction tokens by the new list of transaction tokens.
